# EUROPÄISCHE PATENTSCHRIFT

(11) **EP 1 329 704 B1**
(45) Veröffentlichungstag und Bekanntmachung des Hinweises auf die Patenterteilung: **31.01.2007**
(21) Anmeldenummer: 02027794.3
(22) Anmeldetag: 12.12.2002
(51) Int. Cl.: G01N 1/12, C21C 5/46

(54) **Probennehmer für Schmelzen, insbesondere für auf einer Metallschmelze aufliegende Schlacke**
Sampling probe for melts, in particular for sampling slag on the surface of a molten metal
Sonde d'échantillonnage pour bains de fusion, en particulier pour le prélèvement de laitier à la surface d'un métal fondu

(30) Priorität: 11.01.2002 DE 10201023
(43) Veröffentlichungstag der Anmeldung: 23.07.2003
(73) Patentinhaber: Heraeus Electro-Nite International N.V., 3530 Houthalen (BE)
(72) Erfinder: Knevels, Johan, 3690 Bree (BE); Cappa, Guido Gustaaf Antoon, 3530 Houthalen (BE); Mingneau, Frank, 3520 Zonhoven (BE)
(74) Vertreter: Kühn, Hans-Christian

(56) Entgegenhaltungen:
- WO-A-00/73765
- DE-A- 10 049 253
- US-A- 5 979 253

## Beschreibung

Die Erfindung betrifft einen Probennehmer für Schmelzen, insbesondere für auf einer Metallschmelze aufliegende Schlacke, mit einem in einem Träger angeordneten ein- oder mehrteiligen Körper, der einen Einlauf und eine Probenkammer mit zwei gegenüberliegenden Kammerwänden aufweist, wobei in einer Kammerwand eine Einlauföffnung angeordnet ist.

Derartige Probennehmer sind aus DE 100 49 253 A1 bekannt. Sie eignen sich insbesondere zur Schlackenprobennahme. Derartige Schlacke enthält in der Regel Gasblasen. Dadurch wird die entnommene Probe in vielen Fällen porös und zerbrechlich.

Der Erfindung liegt die Aufgabe zugrunde, den bekannten Probennehmer zu verbessern und stabilere Proben zu ermöglichen.

Die Aufgabe wird erfindungsgemäß dadurch gelöst, dass innerhalb der Probenkammer eine Zwischenplatte beabstandet zu den Kammerwänden angeordnet ist und dass die Zwischenplatte mindestens eine Durchlauföffnung aufweist. Die Durchlauföffnung führt dazu, dass Gasblasen zerteilt und verkleinert werden. Die Probe wird homogener, die Porosität wird geringer. Zusätzlich dient die Zwischenplatte als Verankerung für die Probe, insbesondere eine Schlackenprobe.

Zweckmäßigerweise ist die Probenkammer zylindrisch ausgebildet, wobei ihre Grundflächen einen etwa kreisförmigen Querschnitt aufweisen, deren Durchmesser größer ist als die Dicke der Probenkammer und wobei die Einlauföffnung etwa zentrisch in einer eine Grundfläche bildenden Kammerwand angeordnet ist. Vorteilhaft ist es insbesondere, dass die Zwischenplatte quer zur Einströmrichtung durch die Einlauföffnung in die Probenkammer angeordnet ist. Insbesondere ist es zweckmäßig, dass mindestens eine Kammerwand aus Metall, insbesondere Stahl, gebildet ist. Des weiteren ist eine Probenkammer mit einer ringförmigen Seitenwand aus Metall zweckmäßig. Die Zwischenplatte kann mehrere gleichmäßig über die Fläche der Zwischenplatte verteilte Durchlauföffnungen aufweisen, um eine optimale Zerkleinerung der Gasblasen zu erreichen. Die Zwischenplatte kann aus Metall oder Keramik gebildet sein, die Durchlauföffnungen können etwa so groß sein wie die Einlauföffnung.

In einer vorteilhaften Ausführungsform ist der Einlauf konus- oder trichterförmig ausgebildet, wobei das Ende mit dem geringeren Querschnitt der Probenkammer zugeordnet ist. Die Probenkammer weist zweckmäßigerweise allseitig Metallwände auf. Die Metallwände sind vorzugsweise aus Stahl gebildet.

Der erfindungsgemäße Probennehmer bewirkt eine optimaler Zerteilung der Gasblasen, diese brechen an der Zwischenplatte auf. Die Zwischenplatte bewirkt des weiteren eine Homogenisierung der Probe und sie stabilisiert die Probe nach der Probenentnahme, da Schlacke an sich relativ zerbrechlich ist. Die Zwischenplatte stellt eine zusätzliche Kühlkapazität dar, die insbesondere bei Hochtemperaturschlacke oder sehr flüssiger Schlacke, wie sie z.B. in einem Vakuumofen auftritt, notwenig ist, damit die Schlacke schnell abkühlt und nach der Probennahme nicht aus der Probenkammer herausläuft. Metallene Probenkammerwände dienen ebenfalls der raschen Abkühlung und ermöglichen glatte Probenkammerwände, um optimale Analysenoberflächen zu erhalten. Der äußere Körper ist aus Gießereisand gefertigt.

Nachfolgend wird eine Ausführungsbeispiel der Erfindung an Hand einer Zeichnung erläutert. In der Zeichnung zeigt:

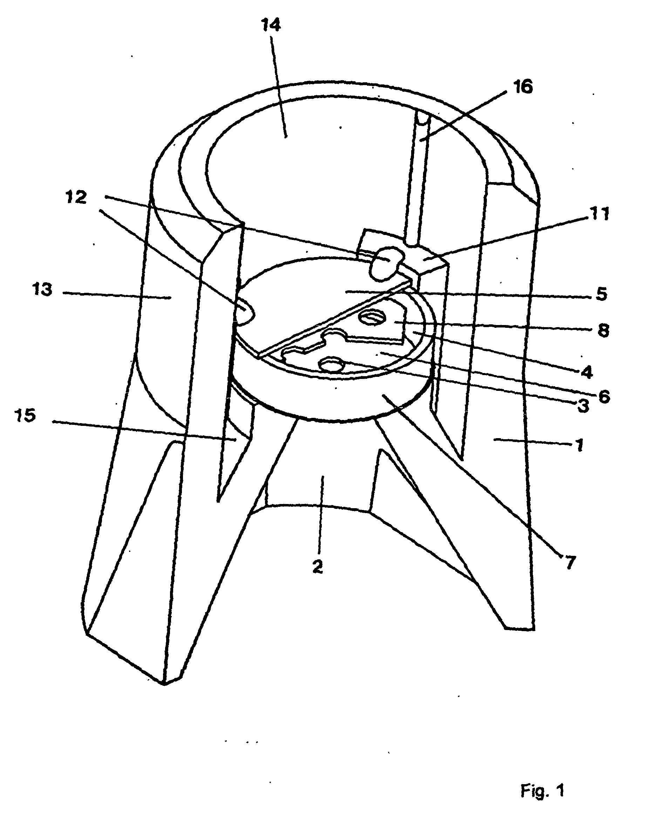

- Fig. 1: einen Probennehmer im Schnitt und

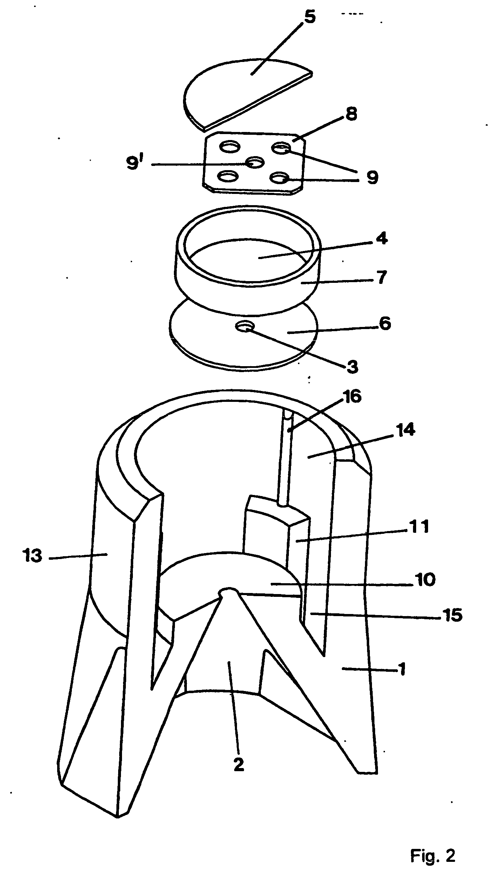

- Fig. 2: die Explosionsdarstellung eines Probennehmers.

Der Körper 1 des Probennehmers ist aus Gießereisand gefertigt. Er weist einen trichterförmigen Einlauf 2 auf, der über eine Einlauföffnung 3 in eine Probenkammer 4 mündet. Die Probenkammer 4 ist scheibenförmig mit kreisförmigem Querschnitt ausgebildet. Die die Grundflächen bildenden Kammerwände 5; 6 sind ebenso wie die ringförmige Seitenwand 7 aus Stahl gebildet.

Parallel zu den Grundflächen 5; 6 ist im Inneren der Probenkammer 4 etwa in der Mitte zwischen den beiden Grundflächen 5; 6 eine Zwischenplatte 8 angeordnet. Die Zwischenplatte 8 aus Stahl weist mehrere Öffnungen 9;9' auf. Um eine zentrale Öffnung 9' mit einem Durchmesser von etwa 8 mm sind vier weitere Öffnungen 9 mit einem Durchmesser von etwa 5 mm vorzugsweise auf einer Kreislinie gleichmässig verteilt angeordnet. Es ist auch möglich, die Zwischenplatte 8 ohne eine zentrale Öffnung auszubilden oder Öffnungen in anderer Anordnung vorzusehen. Die Zwischenplatte 8 ist in der Probenkammer 4 an der Seitenwand 7 verankert.

Die Probenkammer 4 liegt mit ihrer Grundfläche 6 auf einer Anschlagfläche 10 des Gehäuses 1 auf. Seitlich wird sie durch Führungselemente 11 zentriert gehalten. An diesen Führungselementen 11 ist die Grundfläche 5 an Befestigungsstellen 12 arretiert, beispielsweise durch Klebung oder Pressung.

Der Körper 1 wird an einem in der Zeichnung nicht dargestellten Träger üblicher Art gehaltert. Der Träger ist beispielsweise ein Papprohr. Dieses kann entweder die zylindrische Außenseite 13 des Körpers 1 umfassen oder es kann in den Körper 1 hineingesteckt sein und an dessen zylindrischer Innenwand 14 anliegen. In diesem Fall kann das Trägerrohr bis in den Schlitz 15 hineingesteckt sein, der zwischen der Außenwand des Körpers 1 und dem konusförmigen Einlauf 2 angeordnet ist. Um das Trägerrohr seitlich zu fixieren, weist die Innenseite des Körpers 1 eine achsparallele Wulst 16 auf, mit der das Trägerrohr festgeklemmt werden kann.

Der Probennehmer wird von oben in die Schlackeschicht eingeführt, die Schlacke steigt im konus- oder trichterförmigen Einlauf 2 nach oben in die Probenkammer 4. Durch die Konus- oder Trichterform wird in bekannter Weise gesichert, dass Schlacke von einer grossen Fläche erfasst wird und keine Metallschmelze in die Probenkammer gelangt.

## Patentansprüche

1. Probennehmer für Schmelzen, insbesondere für auf einer Metallschmelze aufliegende Schlacke, mit einem an einem Träger angeordneten ein- oder mehrteiligen Körper, der einen Einlauf und eine Probenkammer mit zwei gegenüberliegenden Kammerwänden aufweist, wobei in einer Kammerwand eine Einlauföffnung angeordnet ist, **dadurch gekennzeichnet, dass** innerhalb der Probenkammer (4) eine Zwischenplatte (8) beabstandet zu den Kammerwänden (5;6) angeordnet ist und dass die Zwischenplatte (8) mindestens eine Durchlauföffnung (9;9') aufweist.

2. Probenkammer nach Anspruch 1, **dadurch gekennzeichnet, dass** die Probenkammer (4) zylindrisch ausgebildet ist, dass ihre Grundflächen einen etwa kreisförmigen Querschnitt aufweisen, deren Durchmesser größer ist als die Dicke der Probenkammer (4) und dass die Einlauföffnung (3) etwa zentrisch in einer eine Grundfläche bildenden Kammerwand (5;6) angeordnet ist.

3. Probennehmer nach Anspruch 1 oder 2, **dadurch gekennzeichnet, dass** die Zwischenplatte (8) quer zur Einströmrichtung durch die Einlauföffnung (3) in die Probenkammer (4) angeordnet ist.

4. Probennehmer nach mindestens einem der Ansprüche 1 bis 3, **dadurch gekennzeichnet, dass** mindestens eine Kammerwand (5;6) aus Metall, insbesondere Stahl, gebildet ist.

5. Probennehmer nach Anspruch 2, **dadurch gekennzeichnet, dass** die Probenkammer (4) mindestens eine ringförmige Seitenwand (7) aus Metall aufweist.

6. Probennehmer nach mindestens einem der Ansprüche 1 bis 5, **dadurch gekennzeichnet, dass** die Zwischenplatte (8) mehrere gleichmäßig über die Fläche der Zwischenplatte (8) verteilte Durchlauföffnungen (9;9') aufweist.

7. Probennehmer nach mindestens einem der Ansprüche 1 bis 6, **dadurch gekennzeichnet, dass** die Zwischenplatte (8) aus Metall oder Keramik gebildet ist.

8. Probennehmer nach mindestens einem der Ansprüche 1 bis 7, **dadurch gekennzeichnet, dass** die Durchlauföffnungen (9;9') etwa so groß sind wie die Einlauföffnung (3).

9. Probennehmer nach mindestens einem der Ansprüche 1 bis 8, **dadurch gekennzeichnet, dass** der Einlauf (2) konusförmig ausgebildet ist, wobei das Ende mit dem geringeren Querschnitt der Probenkammer (4) zugewandt ist.

10. Probennehmer nach mindestens einem der Ansprüche 1 bis 9, **dadurch gekennzeichnet, dass** die Probenkammer (4) allseitig Metallwände aufweist.

## Claims

1. Sampler for melts, in particular for slag on a melt of metal, with a single part or multiple part body arranged on a carrier, which body has an inlet and a sample chamber with two opposite chamber walls, an inlet aperture being arranged in one chamber wall **characterised in that**, within the sample chamber (4) an intermediate plate (8) is arranged at a distance from the chamber walls (5;6) and that the intermediate plate (8) has at least one passage aperture (9;9').

2. Sample chamber according to claim 1 **characterised in that** the sample chamber (4) has a cylindrical form, that its base surfaces have a circular cross-section whose diameter is greater than the thickness of the sample chamber (4) and that the inlet aperture (3) is arranged centrically in a chamber wall forming a base surface (5;6).

3. Sampler according to claim 1 or 2 **characterised in that** the intermediate plate (8) is arranged transverse to the direction of inflow (3) through the input aperture (3) into the sample chamber (4).

4. Sampler according to at least one of claims 1 to 3 **characterised in that** at least one chamber wall (5;6) is formed of metal, in particular steel.

5. Sampler according to claim 2 **characterised in that** the sample chamber (4) has at least one annular side wall (7) of metal.

6. Sampler according to at least one of claims 1 to 5 **characterised in that** the intermediate plate (8) has several passage apertures (9;9') evenly distributed over the surface of the intermediate plate (8).

7. Sampler according to at least one of claims 1 to 6 **characterised in that** the intermediate plate (8) is formed of metal or ceramics.

8. Sampler according to at least one of claims 1 to 7 **characterised in that** the passage apertures (9;9') are approximately as large as the input aperture (3).

9. Sampler according to at least one of claims 1 to 8 **characterised in that** the inlet (2) is formed as a cone, the end with the smaller cross-section being turned,towards the sample chamber.

10. Sampler according to at least one of claims 1 to 9 **characterised in that** the sample chamber (4) exhibits metal walls on all sides.

## Revendications

1. Outil à sonder pour fusion, notamment pour des scories se trouvant sur une fusion métallique, présentant un corps à plusieurs parties ou monobloc agencé sur un support qui présente une admission et une chambre de sondage pourvue de deux parois de chambre en vis-à-vis, un orifice d'admission étant agencé dans une paroi de la chambre, **caractérisé en ce qu'**au sein de la chambre de sondage (4), une plaque intermédiaire (8) est agencée à distance des parois de la chambre (5 ; 6) et **en ce que** la plaque intermédiaire (8) présente au moins un orifice de passage (9 ; 9').

2. Chambre de sondage selon la revendication 1, **caractérisée en ce que** la chambre de sondage (4) se présente de façon cylindrique, **en ce que** ses surfaces de base présentent une section quelque peu circulaire, dont le diamètre est aussi important que l'épaisseur de la chambre de sondage (4) et **en ce que** l'orifice d'admission (3) est agencé de façon centrale dans une paroi de la chambre formant une surface de base (5 ; 6).

3. Outil à sonder selon la revendication 1 ou 2, **caractérisé en ce que** la plaque intermédiaire (8) est agencée de façon transversale au sens d'admission par l'orifice d'admission (3) dans la chambre de sondage (4).

4. Outil à sonder selon au moins l'une quelconque des revendications 1 à 3, **caractérisé en ce qu'**au moins une paroi de la chambre (5 ; 6) est constituée de métal, notamment d'acier.

5. Outil à sonder selon la revendication 2, **caractérisé en ce que** la chambre à sonder (4) présente au moins une paroi latérale de forme circulaire (7) en métal.

6. Outil à sonder selon au moins l'une quelconque des revendications 1 à 5, **caractérisé en ce que** la plaque intermédiaire (8) présente plusieurs orifices de passage (9 ; 9') répartis de façon uniforme sur la surface de la plaque intermédiaire (8).

7. Outil à sonder selon au moins l'une quelconque des revendications 1 à 6, **caractérisé en ce que** la plaque intermédiaire (8) est composée de métal ou de céramique.

8. Outil à sonder selon au moins l'une des revendications 1 à 7, **caractérisé en ce que** les orifices de passages (9 ; 9') sont quasiment aussi importants que l'orifice d'admission (3).

9. Outil à sonder selon au moins l'une quelconque des revendications 1 à 8, **caractérisé en ce que** l'admission (2) se présente sous forme de cône, l'extrémité étant orientée vers la section inférieure de la chambre de sondage (4).

10. Outil à sonder selon au moins l'une quelconque des revendications 1 à 9, **caractérisé en ce que** la chambre de sondage (4) présente de toute part des parois métalliques.
